# FASCICULE DE BREVET EUROPEEN

(11) **EP 2 008 376 B1**
(45) Date de publication et mention de la délivrance du brevet: **11.08.2010**
(21) Numéro de dépôt: 07724042.2
(22) Date de dépôt: 05.04.2007
(51) Int. Cl.: H04B 7/185

(54) **PROCÉDÉ ET DISPOSITIF DE COMMUNICATION SUR UNE LIAISON DE COMMUNICATION ENTRE UN AÉRONEF ET UNE STATION SOL**
VERFAHREN UND EINRICHTUNG ZUR KOMMUNIKATION AUF EINER KOMMUNIKATIONSVERBINDUNG ZWISCHEN EINEM FLUGZEUG UND EINER BODENSTATION
METHOD AND DEVICE FOR COMMUNICATION ON A COMMUNICATION LINK BETWEEN AN AIRCRAFT AND A GROUND STATION

(30) Priorité: 18.04.2006 FR 0603378
(43) Date de publication de la demande: 31.12.2008
(73) Titulaire: AIRBUS France, 31060 Toulouse Cedex (FR)
(72) Inventeur: LECLERCQ, Agnès, F-31500 Toulouse (FR); COLLE-MORLEC, Cécile, F-31860 Labarthe sur Leze (FR); BOUCARD, Pascal, F-31770 Colomiers (FR)
(74) Mandataire: Sarraméa, Claude
(86) Numéro de dépôt international: PCT/EP2007/003101
(87) Numéro de publication internationale: WO 2007/121844

(56) Documents cités:
- EP-A- 1 280 316
- WO-A-2004/047405
- US-A1- 2003 139 135
- US-B1- 6 353 779

## Description

L'invention a pour objet un procédé de communication sur une liaison sécurisée de communication entre un aéronef et une station sol, notamment lors du changement d'un niveau de sécurité associé à cette communication, ainsi qu'un aéronef comportant un dispositif susceptible de mettre en oeuvre ce procédé. L'invention concerne également un dispositif de communication sur une liaison sécurisée de communication entre un aéronef et une station sol, notamment lors du changement d'un niveau de sécurité associé à cette communication, ainsi qu'un aéronef comportant un tel dispositif.

Les aéronefs modernes, notamment les avions de transport civil, échangent des informations avec des stations basées au sol, en particulier des stations de contrôle aérien ou des stations permettant de communiquer avec les compagnies aériennes exploitant ces aéronefs. Les informations échangées peuvent notamment être relatives à la météorologie, à la maintenance de l'aéronef, à des autorisations du contrôle aérien, etc. Cet échange d'informations est généralement réalisé au moyen de liaisons de données numériques (« datalink » en anglais), correspondant en particulier aux standards ACARS (« Aircraft Communications Adressing and Reporting System » en anglais) ou ATN (« Aeronautical Telecommunication Network » en anglais). Ces liaisons de données sont généralement du type radiocommunication ou satellite. Afin de garantir la confidentialité des données échangées et la sécurité de la communication eu égard au risque d'intrusion d'un pirate, ces liaisons peuvent être sécurisées : ainsi, il est par exemple possible de prévoir une authentification de l'émetteur d'un message et/ou un cryptage des messages, le niveau de sécurité étant choisi par le pilote de l'aéronef. Cette authentification et/ou ce cryptage peuvent, par exemple, être réalisés au moyen de clefs d'authentification et/ou de cryptage. Il peut parfois être nécessaire de changer le niveau de sécurité de la communication au cours du vol d'un aéronef, notamment lors du survol de pays interdisant les communications cryptées. Lorsque le pilote de l'aéronef demande le changement du niveau de sécurité de la communication, si une requête de changement de niveau de sécurité envoyée par l'aéronef à la station sol n'est pas acquittée par la station sol, il n'y a plus cohérence entre le niveau de sécurité demandé par l'aéronef (nouveau niveau) et le niveau de sécurité considéré actif par la station sol (ancien niveau). L'absence d'acquittement de ladite requête par la station sol peut notamment être due à la perte du message de requête envoyé par l'avion à la station sol ou à la perte du message d'acquittement de la requête envoyé par la station sol vers l'avion.

Dans le domaine des communications, une méthode classique permettant de débloquer une situation d'incohérence entre un émetteur et un récepteur consiste à reprendre la communication à partir d'un état initial connu à la fois de l'émetteur et du récepteur. Dans le cas de la liaison de communication considérée, cela pourrait consister à réinitialiser la communication entre l'aéronef et la station sol à partir d'une communication non sécurisée et à ouvrir une session de communication sécurisée avec un niveau de sécurité correspondant au niveau de sécurité souhaité. Toutefois, une telle méthode présenterait plusieurs inconvénients. Un premier inconvénient est lié au fait que l'ouverture d'une session de communication sécurisée nécessite l'échange de plusieurs messages entre l'aéronef et la station sol et par conséquent un temps d'établissement de ladite session non négligeable qui risquerait d'être pénalisant par rapport aux besoins de communication entre l'aéronef et la station sol, puisque pendant ce temps d'établissement l'aéronef et la station sol ne peuvent pas échanger de message utile. Un autre inconvénient est lié au fait que le retour à un état initial de communication non sécurisée pourrait être préjudiciable par rapport à la sécurisation de la communication, notamment si des messages étaient échangés entre l'aéronef et la station sol entre le moment où la communication serait réinitialisée selon cet état de communication non sécurisée et le moment de l'ouverture de session sécurisée.

Voir EP-A-1 280 316 (Aircraft Management Holdings Limited).

Ces problèmes sont résolus, au moins partiellement, conformément à l'invention par un procédé de communication sur une liaison de communication entre un aéronef et une station sol, ladite liaison de communication étant susceptible d'être configurée selon une pluralité de niveaux de sécurité qui est remarquable du fait que lorsque l'aéronef envoie une requête à la station sol en vue de modifier le niveau de sécurité de ladite communication d'un ancien niveau de sécurité vers un nouveau niveau de sécurité et qu'il ne reçoit pas d'acquittement de ladite requête par la station sol, cet aéronef accepte néanmoins les messages reçus de la station sol selon ledit nouveau niveau de sécurité.

De cette façon, si la station sol a bien reçu et pris en compte la requête de changement de niveau envoyée par l'aéronef, mais que le message d'acquittement envoyé par la station sol n'a pas été reçu par l'aéronef, on assure la continuité de la communication avec le niveau de sécurité souhaité.

Dans un mode préféré de réalisation, tant que l'aéronef n'a pas reçu d'acquittement de la station sol relatif au changement de niveau de sécurité : lorsque le nouveau niveau de sécurité correspond à un niveau de sécurité inférieur à l'ancien niveau de sécurité, l'aéronef rejette les messages reçus de la station sol selon l'ancien niveau de sécurité ; lorsque le nouveau niveau de sécurité correspond à un niveau de sécurité supérieur à l'ancien niveau de sécurité, l'aéronef continue d'envoyer des messages vers la station sol selon l'ancien niveau de sécurité ; lorsque le nouveau niveau de sécurité correspond à un niveau de sécurité inférieur à l'ancien niveau de sécurité, l'aéronef envoie des messages vers la station sol selon le nouveau niveau de sécurité. Ce mode préféré de réalisation de l'invention permet de respecter la réglementation des pays survolés lorsque le pilote de l'aéronef demande la diminution du niveau de sécurité de la communication pour survoler un pays interdisant le cryptage des communications.

De façon avantageuse, lorsque le nouveau niveau de sécurité correspond à un niveau de sécurité supérieur à l'ancien niveau de sécurité, l'aéronef accepte en outre les messages reçus de la station sol selon l'ancien niveau de sécurité tant qu'il n'a pas reçu d'acquittement de ladite station sol relatif au changement de niveau de sécurité.

Dans un mode particulier de réalisation de l'invention, le niveau de sécurité de la communication est fonction du type de message transmis. Cela permet d'adapter ce niveau de sécurité à l'importance et à la criticité des messages afin de n'envoyer avec un niveau de sécurité élevé (ayant un coût d'envoi souvent plus élevé que pour un niveau de sécurité plus faible) que des messages pour lesquels cela présente une importance.

Dans un autre mode particulier de réalisation de l'invention, lorsque l'aéronef reçoit de la station sol un message dont le niveau de sécurité correspond audit nouveau niveau de sécurité, on considère en outre, dans l'aéronef, que ladite requête de changement du niveau de sécurité de la communication a été acquittée par la station sol. En effet, puisque la station sol a envoyé ce message avec le nouveau niveau de sécurité, il est possible de considérer qu'elle a bien pris en compte la requête de changement de niveau envoyée par l'aéronef : l'envoi par la station sol dudit message reçu par l'aéronef correspond donc à un acquittement implicite de ladite requête, ce qui permet de revenir à une situation de cohérence entre le niveau de sécurité demandé par l'aéronef (nouveau niveau) et le niveau de sécurité considéré actif par la station sol.

L'invention concerne aussi un aéronef susceptible de mettre en oeuvre un procédé de communication tel que précité sur une liaison de communication entre cet aéronef et une station sol.

L'invention concerne également un dispositif de communication sur une liaison de communication entre un aéronef et une station sol, ladite communication étant susceptible d'être configurée selon une pluralité de niveaux de sécurité, comportant :
- des moyens d'émission/réception de messages sur cette liaison de communication ;
- des moyens de gestion de communication reliés aux dits moyens d'émission/réception ;
- des moyens de surveillance de communication comprenant des premiers moyens aptes à analyser un message reçu par lesdits moyens d'émission/réception pour déterminer un niveau de sécurité correspondant à ce message ;

Ce dispositif est remarquable en ce qu'il comporte en outre :
- des moyens aptes à mémoriser un ancien et un nouveau niveau de sécurité lorsque l'aéronef envoie à la station sol une requête de changement du niveau de sécurité de la communication ;
- des moyens aptes à mémoriser un état de communication correspondant à un acquittement ou à une absence d'acquittement, par la station sol, d'une requête de changement du niveau de sécurité de la communication, envoyée par l'aéronef à ladite station sol ;
- dans les moyens de surveillance de communication :
- des seconds moyens aptes à comparer ledit niveau de sécurité correspondant à ce message reçu, avec ledit nouveau niveau de sécurité mémorisé et à fournir un résultat de comparaison ;
- des troisièmes moyens aptes à déterminer une action relative à l'acceptation dudit message reçu en fonction d'une part du résultat de comparaison fourni par les seconds moyens et d'autre part de la valeur dudit état de communication mémorisé.

Avantageusement, lesdits moyens de gestion de communication comprennent lesdits moyens de surveillance de communication.

Avantageusement encore, les moyens de gestion de communication comprennent en outre des moyens aptes à gérer la valeur dudit état de communication associé à ladite liaison.

L'invention concerne aussi un aéronef comportant un dispositif de communication entre un aéronef et une station sol, tel que précité.

L'invention sera mieux comprise à la lecture de la description qui suit et à l'examen de la figure annexée.

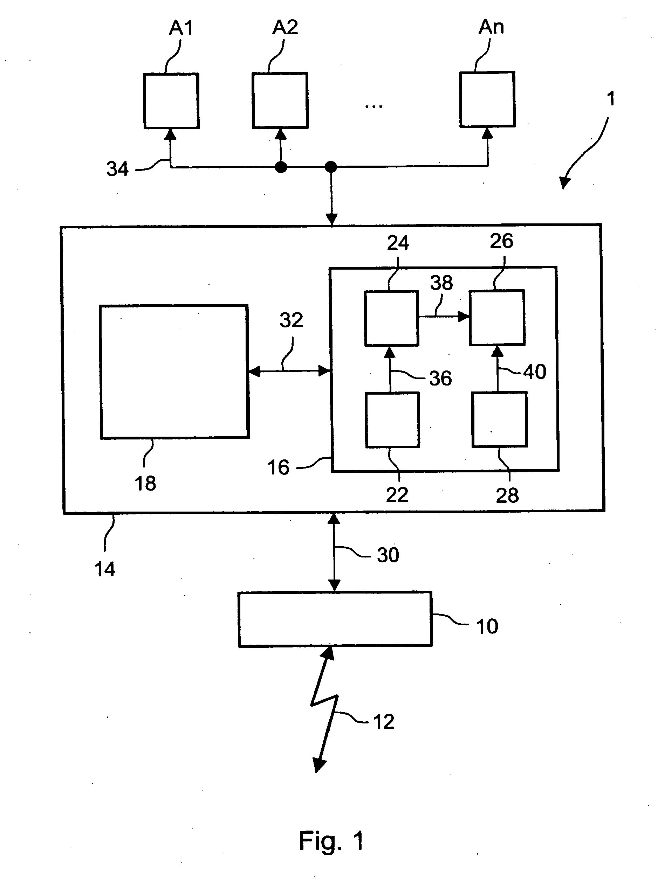

La figure 1 est un schéma synoptique d'un dispositif de communication sur une liaison de communication entre un aéronef et une station sol conforme à l'invention.

Le dispositif 1 conforme à l'invention, représenté schématiquement sur la figure 1, est embarqué à bord d'un aéronef, en particulier un avion de transport civil, communicant avec une station sol au moyen d'une liaison de communication 12, en particulier une liaison de données numériques (« datalink » en anglais), susceptible d'être configurée selon une pluralité de niveaux de sécurité par rapport aux risques d'intrusion d'un pirate sur cette liaison.

Ce dispositif est destiné à déterminer si un message reçu par l'aéronef sur cette liaison 12 doit être accepté ou refusé, en particulier lors d'une incohérence entre le niveau de sécurité demandé par l'aéronef et le niveau de sécurité considéré actif par la station sol. Pour cela, le dispositif 1 conforme à l'invention comporte :
- des moyens d'émission/réception 10 de messages sur une liaison de communication 12 entre ledit aéronef et ladite station sol, par exemple des moyens de communication usuels installés à bord de cet aéronef (moyens de radiocommunication VHF, HF, moyens de communication par satellite, etc.) ;

- des moyens de gestion de communication 14 reliés à ces moyens d'émission/réception 10 par une liaison 30. Ces moyens de gestion de communication peuvent en particulier faire partie d'un calculateur gérant des communications de l'aéronef, par exemple un calculateur de type ATSU (« Air Traffic Services Unit » en anglais) ;
- des moyens (non représentés) aptes à mémoriser un ancien et un nouveau niveau de sécurité lorsque l'aéronef envoie à la station sol une requête de changement du niveau de sécurité de la communication. De préférence, ces moyens font partie des moyens de gestion de communication 14 ;
- des moyens 28 aptes à mémoriser un état de communication correspondant à un acquittement ou à une absence d'acquittement, par la station sol, d'une requête de changement du niveau de sécurité de la communication, envoyée par l'aéronef à ladite station sol ;
- des moyens de surveillance de communication 16, lesquels comprennent :
- des premiers moyens 22 aptes à analyser un message reçu par les moyens d'émission/réception 10 pour déterminer un niveau de sécurité associé à ce message ;
- des seconds moyens 24 aptes à comparer ce niveau de sécurité correspondant à ce message reçu avec ledit nouveau niveau de sécurité mémorisé et à fournir un résultat de comparaison ;
- des troisièmes moyens 26 aptes à déterminer une action relative à l'acceptation dudit message reçu en fonction d'une part du résultat de comparaison fourni par les seconds moyens 24 et d'autre part de la valeur dudit état de communication mémorisé.

De façon préférée, les moyens de gestion de communication 14 comportent un routeur 18 qui reçoit des moyens d'émission/réception 10, par la liaison 30, les messages reçus de la liaison de communication 12 et qui est susceptible d'envoyer chaque message vers au moins une application destinatrice A1, A2, ... An par un ensemble de liaisons 34. Chacune desdites applications peut en particulier être une application informatique installée sur un calculateur de l'aéronef. De façon réciproque, ce routeur collecte des messages provenant desdites applications par l'ensemble de liaisons 34 et les transmet, par la liaison 30, aux moyens d'émission/réception 10 qui les envoient sur la liaison de communication 12.

De façon préférée, encore, comme représenté sur la figure 1, les moyens de surveillance de communication 16 sont intégrés dans les moyens de gestion de communication 14. Ils sont reliés au routeur 18 par une liaison 32.

Les moyens de gestion de communication 14 comprennent en outre les moyens 28 aptes à gérer ledit état de communication associé à la liaison de communication 12. Ces moyens 28 peuvent être intégrés dans les moyens de surveillance de communication 16. Ces moyens 28 peuvent correspondre à une machine d'états qui peut notamment comporter au moins deux états : un premier état correspondant à une cohérence entre le niveau de sécurité demandé par l'aéronef et le niveau de sécurité considéré actif par la station sol ; un deuxième état correspondant à une incohérence entre le niveau de sécurité demandé par l'aéronef et le niveau de sécurité considéré actif par la station sol. Ce deuxième état correspond à une situation dans laquelle les moyens de gestion de communication 14 de l'aéronef ont transmis un message de requête à destination de la station sol afin de changer le niveau de sécurité de la communication (par exemple suite à une demande du pilote de l'aéronef) et dans laquelle lesdits moyens de gestion de communication 14 de l'aéronef n'ont pas reçu un acquittement de la station sol relatif à ce changement de niveau. De façon préférée, si l'aéronef ne reçoit pas d'acquittement de la station sol après lui avoir envoyé une requête de changement du niveau de sécurité de la communication, il renvoie cette requête à la station sol après une durée prédéterminée. L'aéronef peut ainsi envoyer cette requête au moins un nombre N prédéterminé de fois (par exemple 3 fois) à la station sol et ledit deuxième état n'est activé que lorsqu'un acquittement par la station sol n'a pas été reçu par l'aéronef après l'envoi par l'aéronef de N requêtes de changement du niveau de sécurité. Cela permet de s'affranchir des situations dans lesquelles l'absence de réception de l'acquittement est due à une brève perturbation de la liaison de communication, par exemple une perturbation électromagnétique. Le premier état, quant à lui, correspond notamment à une situation dans laquelle les moyens de gestion de communication 14 de l'aéronef, après avoir transmis un message de requête à destination de la station sol afin de changer le niveau de sécurité de la communication (par exemple suite à une demande du pilote de l'aéronef) ont reçu un acquittement de la station sol relatif à ce changement de niveau : il y a cohérence entre le niveau de sécurité demandé par l'aéronef et le niveau de sécurité considéré actif par la station sol.

Lorsque les moyens de gestion de communication 14 font partie d'un calculateur de type ATSU, les moyens de surveillance de communication 16 intégrés dans lesdits moyens de gestion de communication 14, ainsi que les premiers moyens 22, les seconds moyens 24, les troisièmes moyens 26 et les moyens 28 aptes à gérer un état de communication, peuvent être mis en oeuvre sous la forme de fonctions logicielles dudit calculateur ATSU.

Le niveau de sécurité de la communication peut notamment être choisi dans l'ensemble de niveaux suivants ou dans un sous-ensemble de cet ensemble :
- absence de sécurité de la communication vis à vis des risques d'attaque par un pirate ;
- authentification de l'émetteur d'un message, par exemple en utilisant des algorithmes d'authentification utilisant des clefs d'authentification ;
- cryptage des messages transmis sur la liaison de données 12, par exemple en utilisant des algorithmes de cryptage utilisant des clefs de cryptage ;
- authentification de l'émetteur d'un message et cryptage des messages transmis sur la liaison de données 12.

Dans un mode préféré de réalisation de l'invention, la communication est susceptible d'être configurée selon :
- un premier niveau correspondant à une absence de sécurité de ladite communication vis à vis des risques d'attaque par un pirate ;
- un second niveau de sécurité correspondant à une authentification de l'émetteur d'un message ; ou
- un troisième niveau de sécurité correspondant à une authentification de l'émetteur d'un message, ainsi qu'à un cryptage des messages transmis sur la liaison de données 12.

Lorsque les moyens d'émission/réception 10 reçoivent un message de la liaison de communication 12, ils le transmettent, par la liaison 30, aux moyens de gestion de communication 14 où ce message est reçu par le routeur 18. Ce dernier le transmet aux premiers moyens 22 intégrés dans les moyens de surveillance de communication 16 par la liaison 32. Ces premiers moyens 22 analysent ce message de façon à déterminer le niveau de sécurité correspondant à ce message. Ce niveau de sécurité est transmis aux seconds moyens 24 par une liaison 36. Lesdits seconds moyens comparent ce niveau de sécurité avec ledit nouveau niveau de sécurité associé à la communication, mémorisé dans les moyens de gestion de communication 14. Le résultat de la comparaison, entre le niveau de sécurité correspondant au message reçu et le nouveau niveau de sécurité mémorisé, est transmis par les seconds moyens 24 aux troisièmes moyens 26 par une liaison 38.

Les troisièmes moyens 26 reçoivent aussi des moyens 28, par une liaison 40, ledit état de communication associé à la liaison de communication 12. Dans le cas où cet état de communication correspond audit premier état (cohérence entre le niveau de sécurité demandé par l'aéronef et le niveau de sécurité considéré actif par la station sol), de façon conventionnelle, les troisièmes moyens 26 renvoient au routeur 18, par la liaison 32, une information d'acceptation du message reçu lorsque son niveau de sécurité correspond audit nouveau niveau de sécurité et ils renvoient au routeur, par la liaison 32, une information de rejet du message reçu lorsque son niveau de sécurité est différent dudit nouveau niveau de sécurité. Dans le cas où cet état de communication correspond audit second état (incohérence entre le niveau de sécurité demandé par l'aéronef et le niveau de sécurité considéré actif par la station sol), selon l'invention, les troisièmes moyens 26 renvoient au routeur, par la liaison 32, une information d'acceptation du message reçu lorsque son niveau de sécurité correspond audit nouveau niveau de sécurité. Ce mode de fonctionnement est avantageux car il permet dans ce cas de poursuivre la communication sécurisée malgré l'incohérence temporaire entre le niveau de sécurité demandé par l'aéronef et le niveau de sécurité considéré actif par la station sol.

Lorsque le routeur reçoit, par la liaison 32, une information d'acceptation du message reçu, il transmet ce message à l'application destinatrice, par l'ensemble de liaisons 34. Lorsque le routeur reçoit, par la liaison 32, une information de rejet du message reçu, le routeur ne transmet pas ce message à l'application destinatrice.

De façon préférée, les seconds moyens 24 comparent aussi le niveau de sécurité correspondant au message reçu avec ledit ancien niveau de sécurité, mémorisé dans les moyens de gestion de communication 14. Le résultat de la comparaison, entre le niveau de sécurité correspondant au message reçu et l'ancien niveau de sécurité mémorisé, est transmis par les seconds moyens 24 aux troisièmes moyens 26 par la liaison 38. Dans le cas où ledit état de communication correspond audit second état (incohérence entre le niveau de sécurité demandé par l'aéronef et le niveau de sécurité considéré actif par la station sol) :
- les troisièmes moyens 26 renvoient au routeur, par la liaison 32, une information d'acceptation du message reçu lorsque son niveau de sécurité correspond audit ancien niveau de sécurité et le nouveau niveau de sécurité correspond à un niveau de sécurité supérieur à l'ancien niveau de sécurité. Cela permet dans ce cas de poursuivre la communication sécurisée malgré une incohérence temporaire entre le niveau de sécurité demandé par l'aéronef et le niveau de sécurité considéré actif par la station sol ;
- les troisièmes moyens 26 renvoient au routeur, par la liaison 32, une information de rejet du message reçu lorsque son niveau de sécurité correspond audit ancien niveau de sécurité et le nouveau niveau de sécurité correspond à un niveau de sécurité inférieur à l'ancien niveau de sécurité. De cette façon, on garantit que l'aéronef n'accepte pas un message transmis par la station sol selon un niveau de sécurité supérieur au nouveau niveau de sécurité demandé par l'aéronef. Cela permet de respecter la législation de pays interdisant des niveaux de sécurité élevés, notamment le cryptage des communications.

De façon préférée, encore, dans le cas où ledit état de communication correspond audit second état (incohérence entre le niveau de sécurité demandé par l'aéronef et le niveau de sécurité considéré actif par la station sol), lors de l'envoi d'un message par l'aéronef vers la station sol :
- lorsque le nouveau niveau de sécurité correspond à un niveau de sécurité supérieur à l'ancien niveau de sécurité, les moyens de gestion de communication 14 envoient ce message vers la station sol, par l'intermédiaire de la liaison 30, des moyens d'émission/réception 10 et de la liaison de communication 12, selon l'ancien niveau de sécurité. Cela permet de continuer la communication sécurisée en envoyant un message vers la station sol selon l'ancien niveau de sécurité qui, pour l'aéronef, est celui considéré actif par la station sol, puisque l'aéronef n'a pas reçu d'acquittement de sa requête de changement de niveau de sécurité ;
- lorsque le nouveau niveau de sécurité correspond à un niveau de sécurité inférieur à l'ancien niveau de sécurité, les moyens de gestion de communication 14 envoient ce message vers la station sol, par l'intermédiaire de la liaison 30, des moyens d'émission/réception 10 et de la liaison de communication 12, selon le nouveau niveau de sécurité. De cette façon, l'aéronef n'envoie pas un message vers la station sol selon un niveau de sécurité supérieur au nouveau niveau de sécurité. Cela permet de respecter la législation de pays interdisant des niveaux de sécurité élevés, notamment le cryptage des communications.

De façon avantageuse, dans le cas où ledit état de communication correspond audit second état (incohérence entre le niveau de sécurité demandé par l'aéronef et le niveau de sécurité considéré actif par la station sol) :
- après la réception d'un message provenant de la station sol, les moyens de gestion de communication 14 envoient un message de requête vers la station sol, par l'intermédiaire de la liaison 30, des moyens d'émission/réception 10 et de la liaison de communication 12, afin de redemander à cette station sol le changement du niveau de sécurité de la communication pour le porter audit nouveau niveau de sécurité ; et/ou
- avant l'envoi par l'aéronef d'un message vers la station sol, les moyens de gestion de communication 14 envoient un message de requête vers la station sol, par l'intermédiaire de la liaison 30, des moyens d'émission/réception 10 et de la liaison de communication 12, afin de redemander à cette station sol le changement du niveau de sécurité de la communication pour le porter audit nouveau niveau de sécurité.

Cela permet, si les circonstances ayant entraîné l'incohérence temporaire entre le niveau de sécurité demandé par l'aéronef et le niveau de sécurité considéré actif par la station sol ont disparu, de rétablir la cohérence entre ces niveaux de sécurité.

Selon une première variante de l'invention, le niveau de sécurité de la communication est commun à tous les messages circulant sur la liaison de communication 12 entre l'aéronef et cette station sol.

Selon une autre variante, lorsque les messages circulant sur ladite liaison de communication sont susceptibles d'être classés selon différents types de messages, le niveau de sécurité de la communication est fonction du type de message. Cela présente l'avantage de permettre d'adapter le niveau de sécurité à l'importance et à la criticité des messages. Ainsi, il est possible de n'envoyer avec un niveau de sécurité élevé (par exemple ledit troisième niveau) que des messages pour lesquels cela présente une importance. Cela permet de réduire les coûts d'exploitation de l'aéronef lorsque le coût de transmission d'un message est croissant en fonction du niveau de sécurité correspondant à ce message. A titre d'exemple, un premier type de messages dénommé ATC (« Air Traffic Control » en anglais) peut correspondre aux messages échangés entre l'aéronef et le contrôle aérien et un second type de messages dénommé AOC (« Airline Operational Control » en anglais) peut correspondre aux messages échangés entre l'aéronef et la compagnie aérienne exploitant cet aéronef.

## Revendications

1. Procédé de communication sur une liaison de communication (12) entre un aéronef et une station sol, ladite liaison de communication étant susceptible d'être configurée selon une pluralité de niveaux de sécurité, **caractérisé en ce que** lorsque l'aéronef envoie une requête à la station sol en vue de modifier le niveau de sécurité de ladite communication d'un ancien niveau de sécurité vers un nouveau niveau de sécurité et qu'il ne reçoit pas d'acquittement de ladite requête par la station sol, cet aéronef accepte néanmoins les messages reçus de la station sol selon ledit nouveau niveau de sécurité.

2. Procédé selon la revendication 1 **caractérisé en ce que** lorsque l'aéronef ne reçoit pas ledit acquittement et que le nouveau niveau de sécurité correspond à un niveau de sécurité supérieur à l'ancien niveau de sécurité, l'aéronef accepte en outre les messages reçus de la station sol selon l'ancien niveau de sécurité.

3. Procédé selon l'une des revendications 1 ou 2, **caractérisé en ce que** lorsque l'aéronef ne reçoit pas ledit acquittement et que le nouveau niveau de sécurité correspond à un niveau de sécurité supérieur à l'ancien niveau de sécurité, l'aéronef continue d'envoyer des messages vers la station sol selon l'ancien niveau de sécurité tant qu'il n'a pas reçu d'acquittement de ladite station sol relatif au changement de niveau de sécurité.

4. Procédé selon la revendication 1 **caractérisé en ce que** lorsque l'aéronef ne reçoit pas ledit acquittement et que le nouveau niveau de sécurité correspond à un niveau de sécurité inférieur à l'ancien niveau de sécurité, l'aéronef rejette les messages reçus de la station sol selon l'ancien niveau de sécurité.

5. Procédé selon l'une des revendications 1 ou 4, **caractérisé en ce que** lorsque l'aéronef ne reçoit pas ledit acquittement et que le nouveau niveau de sécurité correspond à un niveau de sécurité inférieur à l'ancien niveau de sécurité, l'aéronef envoie des messages vers la station sol selon le nouveau niveau de sécurité.

6. Procédé selon la revendication 1 **caractérisé en ce que** lorsque l'aéronef reçoit de la station sol un message dont le niveau de sécurité correspond audit nouveau niveau de sécurité, on considère en outre, dans l'aéronef, que ladite requête de changement du niveau de sécurité de la communication a été acquittée par la station sol.

7. Procédé selon l'une quelconque des revendications précédentes, **caractérisé en ce que** le niveau de sécurité de la communication est fonction du type de message transmis.

8. Procédé selon l'une quelconque des revendications précédentes, **caractérisé en ce que** la communication est susceptible d'être configurée selon :
- un premier niveau de sécurité correspondant à une absence de sécurité de ladite communication vis à vis des risques d'attaque par un pirate ;
- un second niveau de sécurité correspondant à une authentification de l'émetteur d'un message ; ou
- un troisième niveau de sécurité correspondant à une authentification de l'émetteur d'un message, ainsi qu'à un cryptage des messages transmis sur la liaison de données (12).

9. Dispositif (1) de communication sur une liaison de communication (12) entre un aéronef et une station sol, la communication étant susceptible d'être configurée selon une pluralité de niveaux de sécurité, comportant :
- des moyens d'émission/réception (10) de messages sur cette liaison de communication (12) ;
- des moyens de gestion de communication (14) reliés aux dits moyens d'émission/réception (10) ;
- des moyens de surveillance de communication (16) comprenant des premiers moyens (22) aptes à analyser un message reçu par lesdits moyens d'émission/réception (10) pour déterminer un niveau de sécurité correspondant à ce message ;
**caractérisé en ce qu'**il comporte en outre :
- des moyens aptes à mémoriser un ancien et un nouveau niveau de sécurité lorsque l'aéronef envoie à la station sol une requête de changement du niveau de sécurité de la communication ;
- des moyens (28) aptes à mémoriser un état de communication correspondant à un acquittement ou à une absence d'acquittement, par la station sol, d'une requête de changement du niveau de sécurité de la communication, envoyée par l'aéronef à ladite station sol ;
- dans les moyens de surveillance de communication (16) :
- des seconds moyens (24) aptes à comparer ledit niveau de sécurité correspondant à ce message reçu, avec ledit nouveau niveau de sécurité mémorisé et à fournir un résultat de comparaison ;
- des troisièmes moyens (26) aptes à déterminer une action relative à l'acceptation dudit message reçu en fonction d'une part du résultat de comparaison fourni par les seconds moyens (24) et d'autre part de la valeur dudit état de communication mémorisé.

10. Aéronef comportant un dispositif susceptible de mettre en oeuvre le procédé selon l'une quelconque des revendications 1 à 8.

11. Aéronef comportant un dispositif (1) de surveillance de communication selon la revendication 9.

## Claims

1. A method for communication on a communication link (12) between an aircraft and a ground station, the said communication link being capable of being configured according to a plurality of security levels, **characterized in that**, when the aircraft sends a request to the ground station with view to modifying the security level of the said communication from an old security level to a new security level and it does not receive any acknowledgment of the said request by the ground station, this aircraft nevertheless accepts the messages received from the ground station according to the said new security level.

2. A method according to claim 1, **characterized in that**, when the aircraft does not receive the said acknowledgment and the new security level corresponds to a security level higher than the old security level, the aircraft additionally accepts the messages received from the ground station according to the old security level.

3. A method according to one of claims 1 or 2, **characterized in that**, when the aircraft does not receive the said acknowledgment and the new security level corresponds to a security level higher than the old security level, the aircraft continues to send messages to the ground station according to the old security level as long as it has not received any acknowledgment from the said ground station relating to the change of security level.

4. A method according to claim 1, **characterized in that**, when the aircraft does not receive the said acknowledgment and the new security level corresponds to a security level lower than the old security level, the aircraft rejects the messages received from the ground station according to the old security level.

5. A method according to one of claims 1 or 4, **characterized in that**, when the aircraft does not receive the said acknowledgment and the new security level corresponds to a security level lower than the old security level, the aircraft sends messages to the ground station according to the new security level.

6. A method according to claim 1, **characterized in that**, when the aircraft receives from the ground station a message whose security level corresponds to the said new security level, it is additionally considered in the aircraft that the said request to change the security level of the communication has been acknowledged by the ground station.

7. A method according to any one of the preceding claims, **characterized in that** the security level of the communication is a function of the type of message transmitted.

8. A method according to any one of the preceding claims, **characterized in that** the communication is capable of being configured according to:
- a first level corresponding to absence of security of the said communication with respect to risks of attack by a pirate;
- a second security level corresponding to authentication of the emitter of a message; or
- a third security level corresponding to authentication of the emitter of a message, as well as to encryption of messages transmitted on data link (12).

9. A device (1) for communication on a communication link (12) between an aircraft and a ground station, the communication being capable of being configured according to a plurality of security levels, the device being provided with:
- means (10) for emitting/receiving messages on this communication link (12);
- communication management means (14) connected to the said emitting/receiving means (10);
- communication monitoring means (16) comprising first means (22) capable of analyzing a message received by the said emitting/receiving means (10) in order to determine a security level corresponding to this message;
**characterized in that** it is additionally provided with:
- means capable of storing in memory an old and a new security level when the aircraft sends to the ground station a request to change the security level of the communication;
- means (28) capable of storing in memory a communication state corresponding to an acknowledgment or to an absence of acknowledgment, by the ground station, of a request to change the security level of the communication, sent by the aircraft to the said ground station;
- in the communication monitoring means (16):
- second means (24) capable of comparing the said security level corresponding to this received message with the said new security level stored in memory and of furnishing a comparison result;
- third means (26) capable of determining an action relating to acceptance of the said received message as a function on the one hand of the comparison result furnished by the second means (24) and on the other hand of the value of the said communication state stored in memory.

10. An aircraft provided with a device capable of implementing the method according to any one of claims 1 to 8.

11. An aircraft provided with a communication monitoring device (1) according to claim 9.

## Patentansprüche

1. Verfahren zur Kommunikation zwischen einem Luftfahrzeug und einer Bodenstation über eine Kommunikationsverbindung (12), wobei die Kommunikationsverbindung gemäß mehreren Sicherheitsgraden konfiguriert werden kann, **dadurch gekennzeichnet, dass**, wenn das Luftfahrzeug eine Anforderung an die Bodenstation sendet, um den Sicherheitsgrad der Kommunikation von einem alten Sicherheitsgrad zu einem neuen Sicherheitsgrad zu ändern, und wenn es keine Bestätigung der Anforderung von der Bodenstation empfängt, dieses Luftfahrzeug trotzdem die gemäß dem neuen Sicherheitsgrad von der Bodenstation empfangenen Mitteilungen akzeptiert.

2. Verfahren nach Anspruch 1, **dadurch gekennzeichnet, dass**, wenn das Luftfahrzeug die Bestätigung nicht empfängt, und wenn der neue Sicherheitsgrad einem Sicherheitsgrad entspricht, der höher ist als der alte Sicherheitsgrad, das Luftfahrzeug außerdem die Mitteilungen akzeptiert, die gemäß dem alten Sicherheitsgrad von der Bodenstation empfangen werden.

3. Verfahren nach einem der Ansprüche 1 oder 2, **dadurch gekennzeichnet, dass**, wenn das Luftfahrzeug die Bestätigung nicht empfängt, und wenn der neue Sicherheitsgrad einem Sicherheitsgrad entspricht, der höher ist als der alte Sicherheitsgrad, das Luftfahrzeug weiterhin Mitteilungen gemäß dem alten Sicherheitsgrad an die Bodenstation sendet, solange es keine Bestätigung bezüglich der Änderung des Sicherheitsgrads von der Bodenstation empfangen hat.

4. Verfahren nach Anspruch 1, **dadurch gekennzeichnet, dass**, wenn das Luftfahrzeug die Bestätigung nicht empfängt, und wenn der neue Sicherheitsgrad einem Sicherheitsgrad entspricht, der niedriger ist als der alte Sicherheitsgrad, das Luftfahrzeug die gemäß dem alten Sicherheitsgrad von der Bodenstation empfangenen Mitteilungen zurückweist.

5. Verfahren nach einem der Ansprüche 1 oder 4, **dadurch gekennzeichnet, dass**, wenn das Luftfahrzeug die Bestätigung nicht empfängt, und wenn der neue Sicherheitsgrad einem Sicherheitsgrad entspricht, der niedriger ist als der alte Sicherheitsgrad, das Luftfahrzeug Mitteilungen gemäß dem neuen Sicherheitsgrad an die Bodenstation sendet.

6. Verfahren nach Anspruch 1, **dadurch gekennzeichnet, dass**, wenn das Luftfahrzeug von der Bodenstation eine Mitteilung empfängt, deren Sicherheitsgrad dem neuen Sicherheitsgrad entspricht, im Luftfahrzeug außerdem angenommen wird, dass die Anforderung zur Änderung des Sicherheitsgrads der Kommunikation von der Bodenstation bestätigt wurde.

7. Verfahren nach einem der vorhergehenden Ansprüche, **dadurch gekennzeichnet, dass** der Sicherheitsgrad der Kommunikation vom übertragenen Mitteilungstyp abhängt.

8. Verfahren nach einem der vorhergehenden Ansprüche, **dadurch gekennzeichnet, dass** die Kommunikation konfiguriert werden kann gemäß:
- einem ersten Sicherheitsgrad, der einer nicht vorhandenen Sicherheit der Kommunikation gegenüber Gefahren des Angriffs durch einen Hacker entspricht;
- einem zweiten Sicherheitsgrad, der einer Authentifizierung des Senders einer Mitteilung entspricht; oder
- einem dritten Sicherheitsgrad, der einer Authentifizierung des Senders einer Mitteilung sowie einer Verschlüsselung der auf der Datenverbindung (12) übertragenen Mitteilungen entspricht.

9. Vorrichtung (1) zur Kommunikation zwischen einem Luftfahrzeug und einer Bodenstation über eine Kommunikationsverbindung (12), wobei die Kommunikation gemäß mehreren Sicherheitsgraden konfiguriert werden kann, die aufweist:
- Sende-/Empfangseinrichtungen (10) von Mitteilungen über diese Kommunikationsverbindung (12);
- Einrichtungen zur Kommunikationsverwaltung (14), die mit den Sende-/Empfangseinrichtungen (10) verbunden sind;
- Einrichtungen zur Kommunikationsüberwachung (16), die erste Einrichtungen (22) enthalten, welche geeignet sind, um eine von den Sende-/Empfangseinrichtungen (10) empfangene Mitteilung zu analysieren, um einen dieser Mitteilung entsprechenden Sicherheitsgrad zu bestimmen; **dadurch gekennzeichnet, dass** sie außerdem aufweist:
- Einrichtungen, die einen alten und einen neuen Sicherheitsgrad speichern können, wenn das Luftfahrzeug eine Anforderung zum Ändern des Sicherheitsgrads der Kommunikation an die Bodenstation sendet;
- Einrichtungen (28), die einen Kommunikationszustand speichern können, der einer Bestätigung oder einer Nicht-Bestätigung, durch die Bodenstation, einer Anforderung zur Änderung des Sicherheitsgrads der Kommunikation entspricht, die vom Luftfahrzeug an die Bodenstation gesendet wird;
- in den Einrichtungen zur Kommunikationsüberwachung (16) :
- zweite Einrichtungen (24), die den dieser empfangenen Mitteilung entsprechenden Sicherheitsgrad mit dem neuen gespeicherten Sicherheitsgrad vergleichen und ein Vergleichsergebnis liefern können;
- dritte Einrichtungen (26), die eine Aktion bezüglich der Akzeptierung der empfangenen Mitteilung in Abhängigkeit einerseits von dem von den zweiten Einrichtungen (24) gelieferten Vergleichsergebnis und andererseits vom Wert des gespeicherten Kommunikationszustands bestimmen können.

10. Luftfahrzeug, das eine Vorrichtung aufweist, die das Verfahren nach einem der Ansprüche 1 bis 8 durchführen kann.

11. Luftfahrzeug, das eine Vorrichtung (1) zur Kommunikationsüberwachung nach Anspruch 9 aufweist.
